**Europäisches Patentamt**

**European Patent Office**

**Office européen des brevets**

(19)

(11) Numéro de publication : **0 384 791 B1**

# (12) FASCICULE DE BREVET EUROPEEN

(45) Date de publication du fascicule du brevet :
30.09.92 Bulletin 92/40

(51) Int. Cl.⁵ : **A01F 29/00**

(21) Numéro de dépôt : **90400155.9**

(22) Date de dépôt : **19.01.90**

(54) **Benne distributrice de végétaux tels que le fourrage ou la paille.**

(30) Priorité : **20.01.89 FR 8900671**

(43) Date de publication de la demande :
**29.08.90 Bulletin 90/35**

(45) Mention de la délivrance du brevet :
**30.09.92 Bulletin 92/40**

(84) Etats contractants désignés :
**DE ES FR GB IT**

(56) Documents cités :
**DE-A- 2 810 676**
**FR-A- 2 585 535**
**GB-A- 2 116 834**
**US-A- 3 540 506**

(73) Titulaire : **ETABLISSEMENTS LUCAS G.**
**(Société Anonyme)**
**22 rue du Stade**
**F-85130 La Verrie (FR)**

(72) Inventeur : **Lucas, Gérard**
**Ste Lucas G., 22 rue du Stade**
**F-85130 La Verrie (FR)**

(74) Mandataire : **Bouju, André et al**
**Cabinet Bouju Derambure (Bugnion) S.A. B.P.**
**6250**
**F-75818 Paris Cédex 17 (FR)**

EP 0 384 791 B1

## Description

La présente invention concerne une benne distributrice de végétaux tels que le fourrage ou la paille.

La présente invention vise en particulier les bennes utilisables pour répartir dans les bâtiments de stabulation les aliments ou la litière pour le bétail.

Les végétaux qui sont ainsi à distribuer sont le plus souvent rassemblés sous forme de bottes cylindriques ou parallélépipédiques et la benne doit donc être capable de recevoir de telles bottes, de démêler les végétaux qui les constituent, et de distribuer ces végétaux à l'extérieur de la benne.

L'invention vise conformément au DE-A-28 10 676 une benne destinée à la distribution de végétaux tels que le fourrage ou la paille destinés respectivement à l'alimentation du bétail ou à la constitution de leur litière, et plus particulièrement lorsque lesdits végétaux se présentent sous la forme de bottes cylindriques, parallélépipédiques, etc..., ladite benne comportant un fond mobile acheminant les végétaux placés sur lui vers un dispositif démêleur comprenant au moins un rotor denté ayant un axe horizontal s'étendant dans un plan frontal par rapport au déplacement des végétaux, ce dispositif démêleur étant disposé en amont du dispositif d'éjection des végétaux démêlés vers l'extérieur de la benne, la benne comprenant en outre une herse comprenant à son tour une traverse s'étendant le long du rotor denté et au-dessus de celui-ci, et des éléments de retenue des végétaux, qui s'étendent depuis la traverse vers le rotor denté.

Le fond mobile achemine les bottes contre le rotor denté du dispositif démêleur. Le rotor denté agrippe les végétaux dans la botte et les transmet à un dispositif d'éjection, qui selon le document est un tapis transversal.

Les herses prévues selon le DE-A- 28 10 676 comprennent une herse de coupe des végétaux qui ont franchi le sommet du rotor et, en aval de celle-ci, une herse de déflexion des végétaux qui tendent à s'entortiller autour de l'axe du rotor.

Le sens de rotation du rotor denté est tel que le trajet montant des dents du rotor denté est adjacent à l'intérieur de la benne. Ainsi, le mouvement du rotor denté se combine avec le mouvement du fond mobile pour communiquer aux végétaux un mouvement général de rotation autour d'un axe horizontal parallèle à l'axe de rotation du rotor denté. En raison de ce mouvement, les végétaux sont conduits vers la région haute du démêleur et peuvent tendre à passer en grande quantité au-dessus du rotor denté directement dans le dispositif d'éjection. Ceci se produit en particulier lorsqu'une balle ronde n'a plus qu'un faible diamètre après avoir été en grande partie grignotée par le démêleur. Ce reliquat de faible diamètre tend à passer d'un seul bloc par dessus le rotor denté, ce qui peut créer un bourrage ou endommager le dispositif éjecteur.

Il existe un risque analogue lorsque le fourrage se présente sous forme de bottes parallélépipédiques qui, en conséquence de la façon dont elles sont réalisées, sont en fait constituées par un ruban de végétaux replié en accordéon. Le contact avec le fond mobile, puis avec le rotor denté, tend à faire cheminer le ruban vers le haut et tend à le faire passer au-dessus du rotor denté sans désagrégation substantielle de la part du rotor denté. Les herses prévues selon le DE-A- 28 10 676 aggravent ce risque plus qu'elles ne l'éliminent. Les paquets de végétaux peuvent se coincer entre la herse de coupe et les dents du rotor et bloquer ou même déformer le rotor ou la herse. La herse déflectrice forme avec la paroi fixe située face à elle un entonnoir à très faible convergence, donc très favorable au bourrage.

Le but de la présente invention est de proposer une benne du genre visé par l'invention qui soit de conception simple, et fournisse un débit régulier, avec un minimum de risque de bourrage du dispositif démêleur et de détérioration du dispositif d'éjection.

Suivant l'invention, la benne est caractérisée en ce que la herse est une herse recycleuse qui renvoie dans la benne les paquets de végétaux approchant du sommet du dispositif démêleur sans avoir été démêlés, et en ce qu'à ce titre des extrémités libres des éléments de retenue sont sensiblement situées radialement au-delà de la trajectoire circulaire d'un disque tronçonneur porté par le rotor denté et entre un plan vertical tangent à un cercle de révolution du dispositif démêleur côté amont et un plan vertical passant par l'axe du rotor du dispositif démêleur.

La herse renvoie dans la benne les paquets de végétaux qui tendent à passer au-dessus du rotor denté avant qu'ils n'atteignent des régions propices au coincement et au bourrage.

On connaît certes d'après le US-A- 3 540 506 un dispositif de déchiquetage avec deux herses successives le long de la partie montante du rotor. Mais la première herse est une herse de coupe qui est interpénétrée avec le rotor. Quand à la deuxième herse, située au sommet du rotor, elle ne peut que recouper les végétaux ou les retenir, sans pouvoir les recycler puisque la première herse empêche le retour des végétaux dans la benne.

Il est préférable selon l'invention que certains au moins des éléments de retenue présentent une face de guidage des végétaux orientée vers l'intérieur de la benne et s'étendant vers le haut à partir du rotor denté.

Ainsi, si un bloc de végétaux tend à passer au-dessus du rotor denté, les faces de guidage l'en empêchent et l'obligent à continuer sa course vers le haut au-delà de la zone d'influence du rotor denté, ce qui permettra

2

à ce bloc de retomber dans la benne et de subir un nouveau cycle de désagrégation partiel ou total.

Selon une version avantageuse, certains au moins des éléments de retenue comportent une dent faisant saillie vers le rotor denté par rapport à une face de garde située à distance de la traverse.

De préférence, les faces de guidage ou de garde des éléments de retenue sont écartées entre elles d'un élément de retenue à l'autre, pour faciliter le passage des végétaux démêlés entre les éléments de retenue.

Il est préférable selon l'invention que la herse soit montée de manière à pouvoir pivoter autour d'un axe sensiblement parallèle à l'axe de rotation du rotor denté.

D'autres particularités et avantages de l'invention ressortiront encore de la description ci-après.

Aux dessins annexés, donnés à titre d'exemples non limitatifs :

– la figure 1 est une vue en coupe longitudinale schématique d'une benne selon l'invention ;

– la figure 2 est une vue en coupe transversale de la benne, vue de l'arrière ;

– la figure 3 est une vue de dessus de la benne, la herse n'étant pas représentée ;

– la figure 4 est une coupe longitudinale simplifiée d'un autre mode de réalisation de la benne selon l'invention, le dispositif éjecteur n'étant pas représenté ;

– les figures 5 à 8 sont des vues en perspective de quatre modes de réalisation des éléments de retenue de la herse de la figure 4 ;

– la figure 9 est une vue schématique en coupe transversale de la benne de la figure 4, vue de l'arrière, les dents des rotors n'étant pas représentées ;

– la figure 10 est une vue schématique en coupe longitudinale d'un troisième mode de réalisation de la benne ;

– les figures 11 à 13 sont des vues analogues aux figures 5, 7 et 9 respectivement, mais concernant le troisième mode de réalisation de la benne ;

– la figure 14 visualise deux variantes de réalisation de la herse pour une benne par ailleurs conforme à la figure 10 ; et

– la figure 15 est une vue en coupe longitudinale partielle d'un quatrième mode de réalisation de la benne selon l'invention.

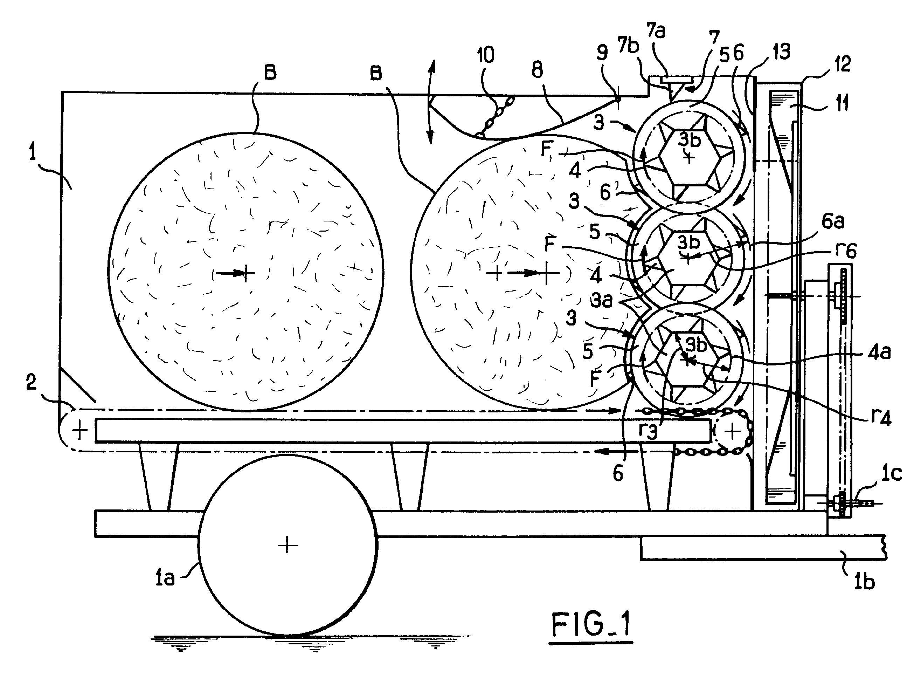

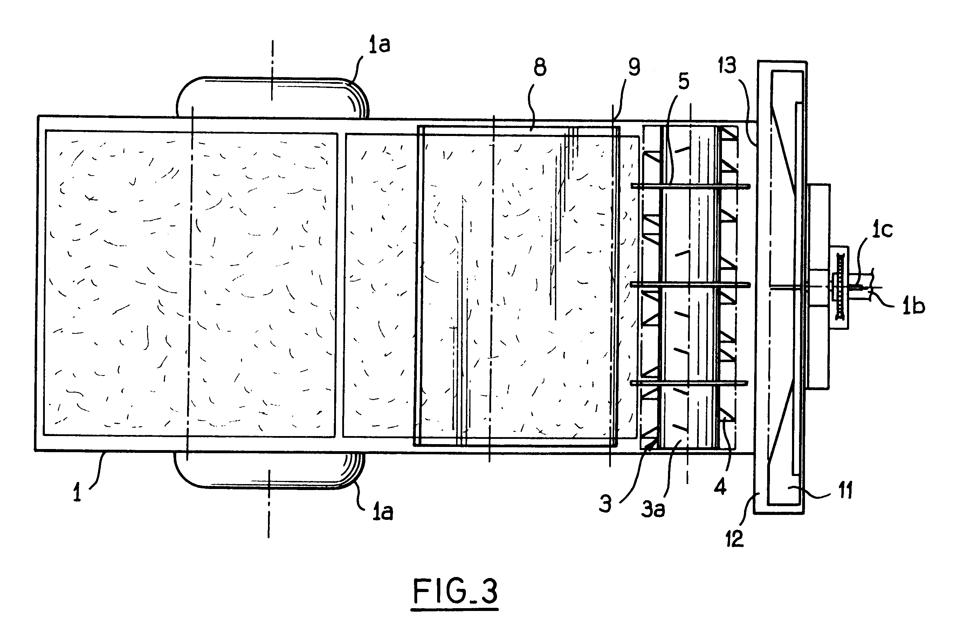

Telle que représentée aux figures 1 à 3, la benne 1 montée sur un châssis équipé de roues 1a et d'un timon d'attelage 1b comporte un fond mobile, en l'occurence un tapis convoyeur à chaine 2 de type classique muni de barres d'entraînement et à vitesse de défilement variable. Le brin supérieur du tapis convoyeur 2 entraîne les bottes cylindriques B vers l'avant de la benne, c'est-à-dire vers la droite aux figures 1 et 3. Les parois verticales de la benne ou ridelles ont une hauteur suffisamment importante pour pouvoir contenir le diamètre des bottes cylindriques B disposées transversalement à plat sur le tapis convoyeur, la longueur de la benne étant dans l'exemple déterminée pour pouvoir contenir au moins deux bottes par exemple. L'avancement du tapis amène chacune des bottes en contact avec le dispositif démêleur constitué dans l'exemple choisi d'une série de rotors dentés 3 d'axes horizontaux, disposés parallèlement en superposition dans un plan frontal à l'avant de la benne. Ces rotors comprennent un tambour central 3a portant des dents 4 faisant saillie radialement par rapport au tambour 3a. Les rotors 3 sont également équipés de disques tronçonneurs 5 comportant sur leur périphérie des dents 6 destinées à trancher le produit constituant la botte. Ces disques ont une diamètre supérieur au diamètre du cercle de révolution des pointes des dents 4, et réalise ainsi un tronçonnage de la botte sur sa longueur au fur et à mesure de son avance vers l'avant de la benne, avant l'intervention des dents 4. Les disques tronçonneurs 5 de chaque rotor 3 ont un positionnement en quinconce par rapport aux disques 5 du ou des roto(s) voisin(s). La distance d'entr'axe des rotors est telle que les cercles de révolution des pointes des dents 6 des disques tronçonneurs 5 interfèrent. Les rotors dentés 3 sont entraînés en rotation autour de leur axe respectif 3b par des moyens de transmission non représentés qui les relient à l'arbre de prise de force 1c de la benne 1. Le sens de rotation est celui représenté par les flèches F à la figure 1, c'est-à-dire vers le haut du côté adjacent à l'intérieur de la benne 1.

Les dimensions radiales des rotors 3 sont relativement petites, et obéissent par exemple aux relations suivantes :

– distance moyenne $r_3$ entre l'axe 3b de chaque rotor 3 et les points de la surface latérale du tambour 3a qui sont exposés au contact avec les végétaux :

$$120 < r_3 < 200 \text{ mm environ}$$

– rayon $r_4$ du cercle de révolution 4a des dents 4 ;

$$180 < r_4 < 300 \text{ mm environ}$$

– rayon $r_6$ du cercle de révolution 6a des dents 6 des disques tronçonneurs 5 :

$$200 < r_6 < 350 \text{ mm environ.}$$

Ainsi, la distance r entre l'axe 3b d'un rotor 3 et un point quelconque du rotor 3 exposé au contact avec les végétaux, c'est-à-dire dans l'exemple un point appartenant soit à la surface latérale extérieure du tambour 3a, soit à la partie saillante des dents 4, soit à la partie saillante des disques tronçonneurs 6, on a sensiblement

la relation :

$$120 < r < 350 \text{ mm.}$$

De plus, les rotors sont entraînés à une vitesse de rotation relativement grande pour ce type de matériel.

Si la benne est destinée à la distribution de végétaux à tiges relativement longues et sans que la longueur des tiges soit réduite de manière importante par la distribution, la vitesse de rotation de chacun des rotors 3 est sensiblement comprise entre 80 et 150 rad/s (entre 800 et 1 500 t/mn).

Compte tenu des valeurs précitées de $r_3$, $r_4$ et $r_6$, on a donc les relations suivantes, dans lesquelles $v_3$, $v_4$ et $v_6$ sont les vitesses linéaires des points de la surface latérale extérieure du tambour 3a, de la pointe des dents 4 et respectivement de la pointe des dents 6 :

$$10 < v_3 < 30 \text{ m/s}$$
$$15 < v_4 < 45 \text{ m/s}$$
$$16 < v_6 < 50 \text{ m/s.}$$

Par conséquent, la vitesse linéaire v d'un point quelconque du rotor, exposé au contact avec les végétaux obéit à la relation suivante :

$$10 < v < 50 \text{ m/s.}$$

On a encore les relations suivantes :

$$0{,}75 \cdot 10^3 < r_3 \cdot w^2 < 4{,}5 \cdot 10^3 \quad \text{m.} \ (\text{rad/s})^2$$
$$1{,}1 \cdot 10^3 < r_4 \cdot w^2 < 7 \cdot 10^3 \quad \text{m.} \ (\text{rad/s})^2$$
$$1{,}3 \cdot 10^3 < r_6 \cdot w^2 < 8 \cdot 10^3 \quad \text{m.} \ (\text{rad/s})^2$$
$$0{,}75 \cdot 10^3 < r \cdot w^2 < 8 \cdot 10^3 \quad \text{m.} \ (\text{rad/s})^2$$

Ces dernières relations donnent le produit de la distance à l'axe et du carré de la vitesse angulaire, et ce produit est indicatif de la force centrifuge que les rotors sont capables de communiquer aux végétaux.

Exemple :

Il a été réalisé une machine avec les valeurs suivantes :

$r_3 = 0{,}142$ m
$r_4 = 0{,}217$ m
$r_6 = 0{,}258$ m
$w = 113$ rad/s (1 080 t/mn)
$v_3 = r_3 \cdot w \approx 16$ m/s
$v_4 = r_4 \ w \approx 24{,}5$ m/s
$v_6 = r_6 \ w \approx 29$ m/s
$r_3 \ w^2 \approx 1{,}8 \cdot 10^3$ m. $(\text{rad/s})^2$
$r_4 \ w^2 \approx 2{,}8 \cdot 10^3$ m. $(\text{rad/s})^2$
$r_6 \ w^2 \approx 3{,}3 \cdot 10^3$ m. $(\text{rad/s})^2$.

Si la benne est destinée à la distribution de végétaux avec hachage simultané de ceux-ci pour ramener les tiges à une longueur de par exemple quelques centimètres, la vitesse de rotation de chacun des rotors 3 est sensiblement comprise entre 150 et 250 rad/s.

Compte tenu des valeurs précitées de $r_3$, $r_4$ et $r_6$, qui sont inchangées, on a donc les relations suivantes, dans lesquelles $v_3$, $v_4$ et $v_6$ sont les vitesses linéaires des points de la surface latérale extérieure du tambour 3a, de la pointe des dents 4 et respectivement de la pointe des dents 6 :

$$18 < v_3 < 50 \text{ m/s}$$
$$27 < v_4 < 75 \text{ m/s}$$
$$30 < v_6 < 90 \text{ m/s.}$$

Par conséquent, la vitesse linéaire v d'un point quelconque du rotor, exposé au contact avec les végétaux obéit à la relation suivante :

$$18 < v < 90 \text{ m/s.}$$

On a encore les relations suivantes :

$$2,7 \, . \, 10^3 \, < \, r_3 . w^2 \, < \, 12,5 \, . \, 10^3 \qquad m.(rad/s)^2$$
$$4 \quad . \, 10^3 \, < \, r_4 . w^2 \, < \, 19 \, . \, 10^3 \qquad m.(rad/s)^2$$
$$4,5 \, . \, 10^3 \, < \, r_6 . w^2 \, < \, 22. \, 10^3 \qquad m.(rad/s)^2$$
$$2,7 \, . \, 10^3 \, < \, \quad r . w^2 \, < \, 22 \, . \, 10^3 \qquad m.(rad/s)^2 .$$

Exemple :

$r_3 = 0,142$ m
$r_4 = 0,217$ m
$r_6 = 0,258$ m
$w = 210$ rad/s (2 000 t/mn)
$v_3 = r_3 . w \approx 30$ m/s
$v_4 = r_4 . w \approx 46$ m/s
$v_6 = r_6 . w \approx 54$ m/s
$r_3 . w^2 \approx 6,3 . 10^3$ m. $(rad/s)^2$
$r_4 . w^2 \approx 9,7 . 10^3$ m. $(rad/s)^2$
$r_6 . w^2 \approx 11,4 . 10^3$ m. $(rad/s)^2$.

En ce qui concerne l'aptitude du rotor denté à hacher, on a donné les valeurs de $rw^2$ , mais c'est a priori la vitesse linéaire v qui est déterminante.

Pour chaque paramètre ($r$, $w$, $v$, $rw^2$) les plages de valeurs pour la distribution sans et respectivement avec hachage se chevauchent, ce qui n'est pas surprenant car d'autres paramètres interviennent, en particulier la nature des végétaux à distribuer, la répartition des dents et le fait que leur bord menant soit plus ou moins tranchant.

La botte en cours de démêlage est maintenue en position à l'aide d'une tôle plafond 8 dont le double rôle consiste à éviter que la botte recule sous l'action des rotors 3 et que les végétaux démêlés par les rotors 3 ne soient projetés vers l'extérieur. A son extrémité avant, la tôle 8 est montée basculante par rapport aux ridelles de la benne autour d'un axe horizontal 9. Le profil de formage de la tôle est tel que sa partie arrière, opposée à l'axe de basculement, est relevée vers le haut de façon à ne pas s'opposer à l'introduction d'une nouvelle botte lorsque la botte précédente a été démantelée. Cette partie relevée a une inclinaison déterminée pour provoquer le relevage de la tôle plafond au cours de l'acheminement de la botte vers le poste de démêlage, sous l'action du dispositif convoyeur. Le basculement vers le bas de la tôle plafond est limité d'une façon réglable au moyen d'une chaîne 10.

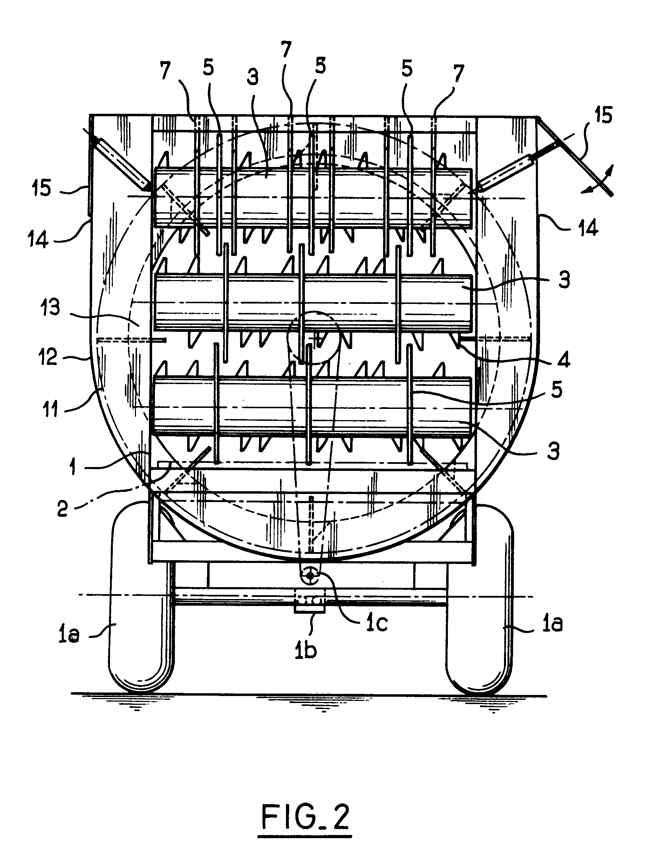

L'éjection du produit s'effectue vers l'extérieur par l'intermédiaire d'un ventilateur ou turbine de grand diamètre 11 tournant dans un carénage circulaire 12 situé en aval du dispositif démêleur et constituant la paroi transversale avant de la benne. Ce carénage comporte dans le plan frontal séparant la zone de révolution des pales du ventilateur et la zone de rotation des rotors du dispositif de déchiquetage, une tôle 13 dont la surface est matérialisée en figure 2 par la zone ombrée. Cette tôle comporte en sa partie centrale une découpe mettant en communication le carénage du ventilateur avec l'intérieur de la benne. Une telle disposition améliore l'aspiration et le refoulement du ventilateur : les fragments légers du produit démêlé sont aspirés et sustentés par le flux d'air et acheminés dans le carénage du ventilateur pour être éjectés vers l'extérieur à travers l'un ou l'autre des deux orifices latéraux 14 prévus à cet effet sur les parois longitudinales de la benne et en partie haute de celles-ci. Selon une disposition déjà connue, ces orifices sont munis de volets déflecteurs 15 d'ouverture réglable commandée par vérin par exemple, l'amplitude de cette ouverture déterminant la distance du point de projection. L'éjection par l'un ou l'autre des côtés de la benne s'obtient par inversion du sens de rotation du ventilateur.

La benne comporte au-dessus des rotors 3 une herse 7 comprenant une traverse 7a s'étendant parallèlement aux axes de rotation 3b des rotors 3, et des éléments allongés 7b qui s'étendent depuis la traverse 7a vers le rotor 3 supérieur.

La herse 7 est destinée à empêcher que des paquets de végétaux non démêlés passent directement de l'intérieur de la benne dans le carénage 12 par dessus les rotors 3. De tels paquets de végétaux sont en effet susceptibles de se détacher partiellement ou totalement de la botte puis de remonter jusqu'au sommet de la benne sous l'action des rotors 3 qui, du côté de la benne, tournent vers le haut. La structure précise à donner à la herse est un point délicat de la conception de la machine car la herse doit arrêter efficacement les paquets, sans créer systématiquement des bourrages lorsque les paquets sont arrêtés. De plus, en cas de bourrage, les opérations de débourrage doivent être aussi simples que possible.

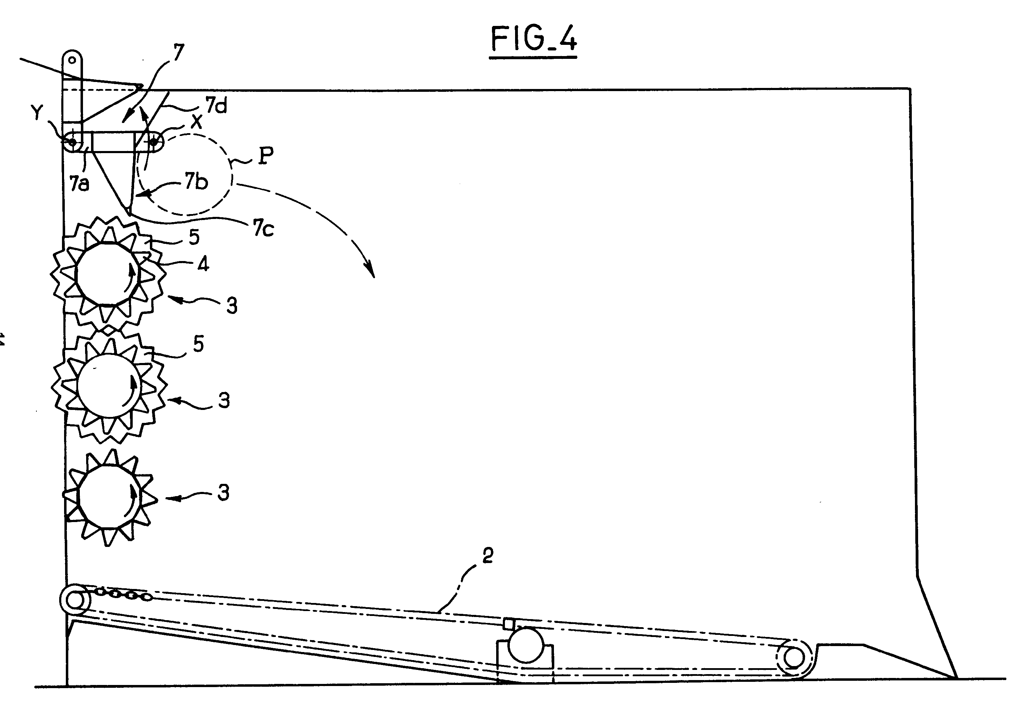

Un mode de réalisation de la herse 7 va être décrit plus en détail en référence aux figures 4 à 9 concernant un second mode de réalisation de la benne selon l'invention, lequel se distingue du premier mode en ce que le nombre de dents 4 sur le pourtour de chaque rotor 3 est plus important, en ce que des disques tronçonneurs 5 ne sont prévus que sur les deux rotors 3 du haut et ont un contour en dents de scie au lieu d'avoir un contour circulaire avec un petit nombre de dents de très faible hauteur.

A la figure 4, la herse 7 est représentée dans deux positions extrêmes entre lesquelles la herse est mobile par pivotement autour d'un axe Y solidaire des ridelles de la benne.

En position basse, position de service, les éléments de retenue 7b de la herse 7 s'étendent vers le bas depuis la traverse 7 vers le rotor 3 supérieur. La herse 7 peut être fixée dans cette position par boulonnage amovible selon l'axe X distinct de l'axe Y, ou par un autre moyen par exemple du type attache rapide.

En cas de bourrage entre la herse 7 et le rotor 3 supérieur, on défait le boulonnage ou respectivement l'attache rapide et on fait passer la herse dans la position haute représentée à la figure 4, de manière à dégager les végétaux formant bourrage. On ramène ensuite la herse en position basse pour remettre la benne en fonctionnement.

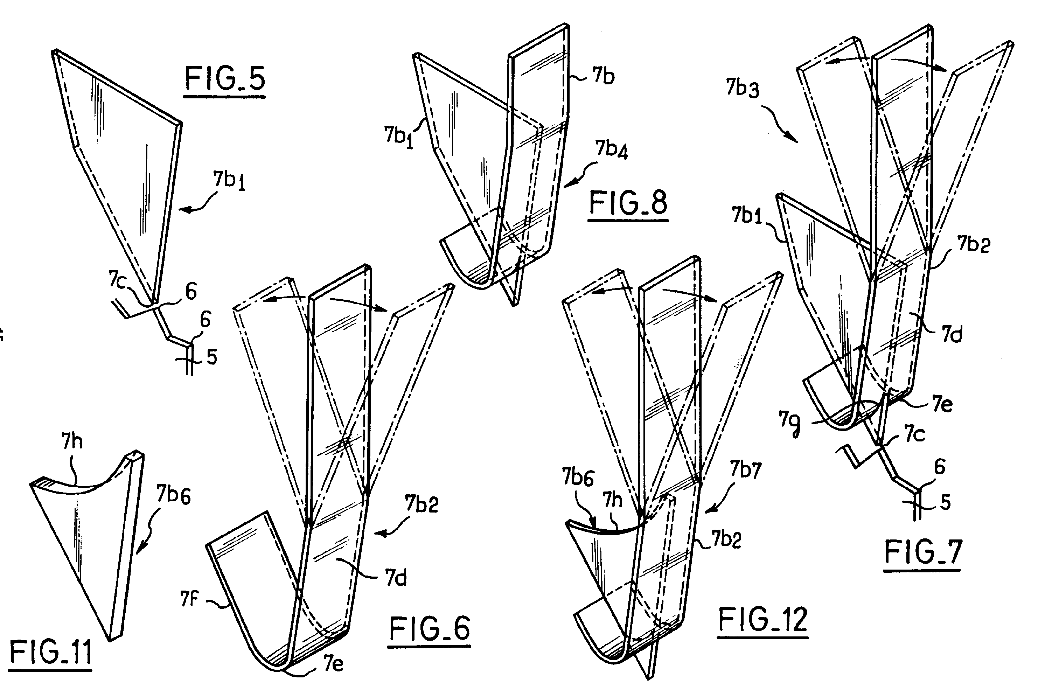

Comme le montre la figure 5, les éléments de retenue peuvent être constitués par des dents $7b_1$ s'étendant dans un plan perpendiculaire aux axes 3b des rotors 3. Plus précisément la dent $7b_1$ s'étend de préférence dans le même plan qu'un disque tronçonneur 5 du rotor 3 supérieur, et la pointe 7c de la dent est à une distance très faible de la trajectoire circulaire des pointes des dents 6 du disque tronçonneur 5 précité.

Les éléments de retenue peuvent également être constitués par des fers plats profilés $7b_2$ (figure 6) qui présentent une face de guidage 7d orientée vers l'intérieur de la benne et s'étendant vers le haut à partir du rotor denté. A la figure 6, on a représenté respectivement en trait plein et en trait mixte trois variantes pour l'inclinaison de la partie supérieure de la face de guidage 7d. A la figure 4, c'est la variante avec inclinaison vers l'intérieur de la benne qui est représentée.

La face de guidage 7d a pour but de guider vers le haut de la benne, jusqu'en dehors de la zone d'influence des rotors 3, tout paquet de végétaux P qui vient buter contre la herse 7. Un tel paquet peut ensuite retomber à l'intérieur de la benne pour subir un nouveau cycle de démêlage lorsque le fond mobile 2 l'aura ramené au contact du rotor 3 inférieur.

L'extrémité inférieure de la surface de guidage 7d est raccordée à une face convexe de profil courbe 7e qui est à son tour raccordée à une face arrière oblique 7f s'étendant obliquement vers le haut.

Les éléments de retenue de la herse 7 peuvent également être constitués par des éléments $7b_3$ (figure 7) qui comprennent un fer plat $7b_2$ analogue à celui de la figure 6, et une dent $7b_1$ analogue à celle de la figure 5. La dent $7b_1$ est soudée contre la face intérieure du fer plat $7b_2$ tandis que la pointe 7c de la dent $7b_1$ fait saillie vers l'extérieur du fer plat $7b_2$ à travers une fente 7g pratiquée à travers la surface 7e du fer plat $7b_2$.

Comme dans l'exemple de la figure 5, la pointe 7c de la figure 7 est en service très proche de la circonférence de révolution des dents 6 d'un disque tronçonneur 5. On empêche ainsi tout passage de paquets de végétaux au-dessus des disques tronçonneurs 5, tout en minimisant les risques de bourrage et sans avoir besoin d'une grande précision sur le profil donné aux fers plats $7b_2$.

Dans l'ensemble $7b_3$ de la figure 7, la face convexe 7e du fer plat $7b_2$ sert de garde empêchant la dent $7b_1$ de se piquer profondément dans un paquet de végétaux qui tend à passer au-dessus du rotor 3 supérieur. Ainsi, le paquet de végétal qui n'a pas pu se piquer profondément sur la dent $7b_1$ peut continuer son trajet vers le haut grâce à la surface de guidage 7d du fer plat $7b_2$. Comme le montre la figure 4, la saillie formée par la pointe 7c de la dent $7b_1$ par rapport à la face convexe 7e est très faible, de l'ordre de 1 ou 2 cm.

L'élément de retenue $7b_4$ représenté à la figure 8 est semblable à l'élément $7b_3$ de la figure 7, excepté que le fer plat $7b_2$ s'étend moins haut au-dessus de la dent $7b_1$.

L'élément $7b_4$ présente donc comme l'élément $7b_3$ une surface de garde 7e qui est située à distance de la traverse 7a vers les rotors 3 pour limiter la profondeur selon laquelle la dent $7b_1$ peut se piquer dans un éventuel paquet de végétaux.

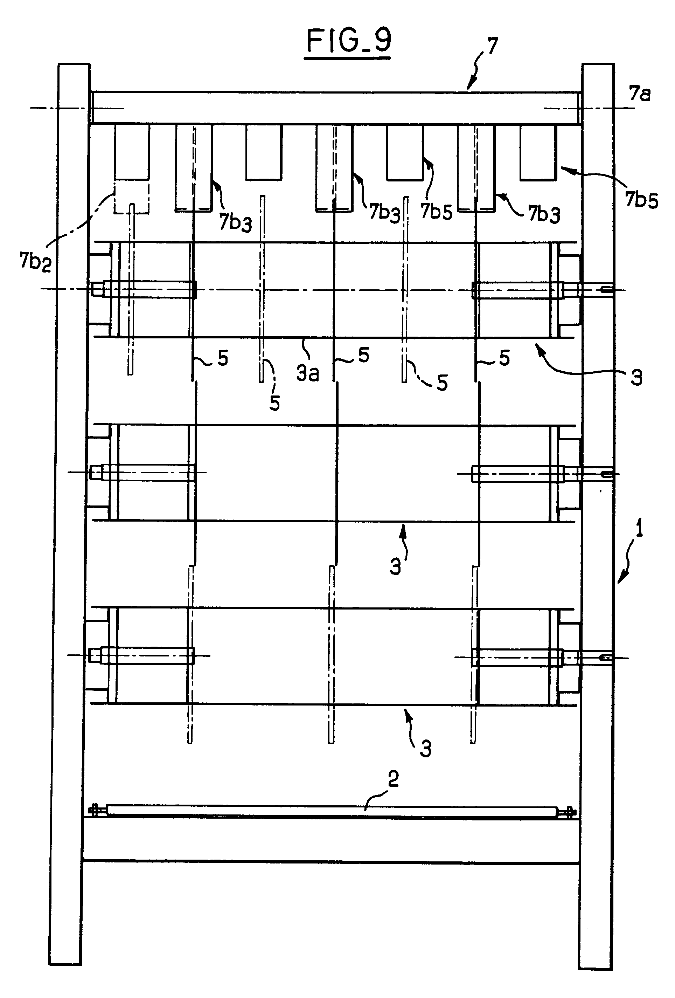

Comme le montre la figure 9, le rotor supérieur 3 peut comporter trois disques tronçonneurs 5 représentés en trait plein, et la herse 7 peut comporter trois éléments de retenue $7b_3$, chacun en regard de l'un des disques tronçonneurs 5.

Les éléments de retenue $7b_3$ peuvent alterner avec des éléments de retenue $7b_5$ semblables aux éléments $7b_2$ de la figure 6 mais légèrement moins longs selon la direction verticale. Comme représenté en trait mixte à gauche de la figure, il est également possible de prévoir en ces emplacements des éléments $7b_2$. En regard des éléments $7b_5$ ou $7b_2$, il est possible de prévoir sur le tambour 3a des disques tronçonneurs additionnels représentés en trait mixte.

D'une manière générale, il est possible de varier le nombre des disques tronçonneurs sur chacun des rotors 3, comme cela est également représenté en trait mixte sur le rotor 3 du bas.

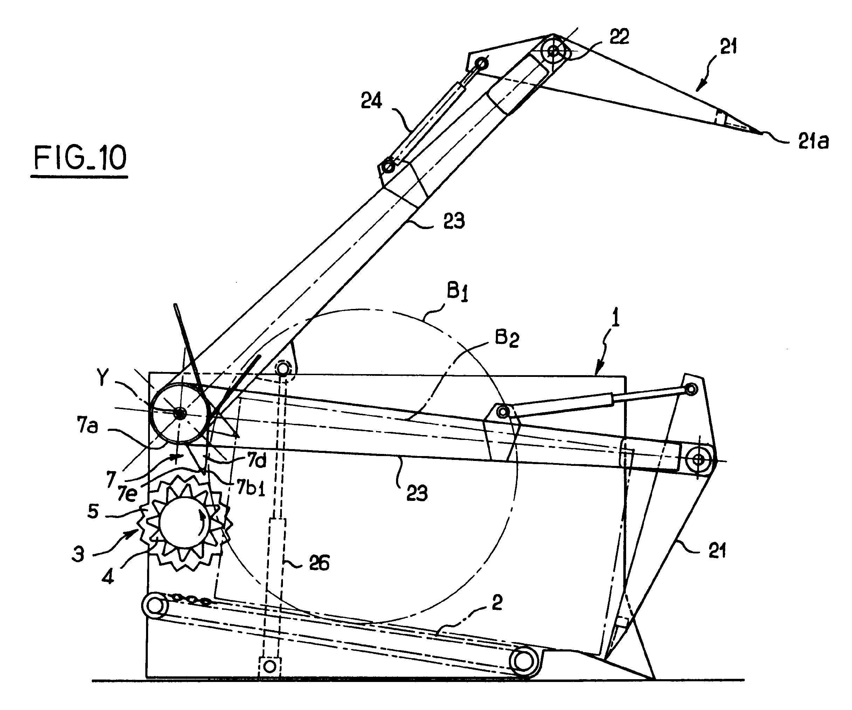

Dans le mode de réalisation représenté à la figure 10, la benne est équipée d'un poussoir de préhension 21 qui est articulé selon un axe 22 entre les extrémités libres de deux bras 23 situés de part et d'autre de la benne 1.

A leur extrémité opposée au poussoir de préhension 21, les bras 23 sont articulés relativement au châssis de la benne 1 selon l'axe Y, c'est-à-dire, selon une particularité importante de l'invention, selon l'axe de pivotement de la herse 7. La traverse 7a de la herse 7 est un tube d'assez grand diamètre qui assure un couplage angulaire entre les deux bras 23 situés de part et d'autre de la benne. Ainsi, la herse 7 est solidaire des bras 23.

Un vérin 24, ou deux vérins 24 parallèles actionne(nt) le poussoir de préhension 21 en rotation autour de son axe 22 par rapport aux bras 23 entre la position représentée en haut de la figure 10 dans laquelle l'extrémité libre 21a du poussoir 21 peut être engagée derrière une botte ronde B1 ou une botte rectangulaire B2 tandis qu'un vérin 26 ou deux vérins 26 parallèles agissant entre le châssis de la benne 1 et les bras 23 permet(tent) à ces derniers de redescendre vers une position basse représentée également à la figure 10. Après cela, le ou les vérins 24 sont actionnés pour ramener le poussoir tranchant 21 dans la position représentée en bas à droite de la figure 10 pour engager la botte B1 ou la botte B2 dans la benne 1, le poussoir de préhension 21 servant ensuite de porte arrière pour la benne 1.

On note également sur la figure 10 que le dispositif démêleur ne comprend qu'un rotor 3.

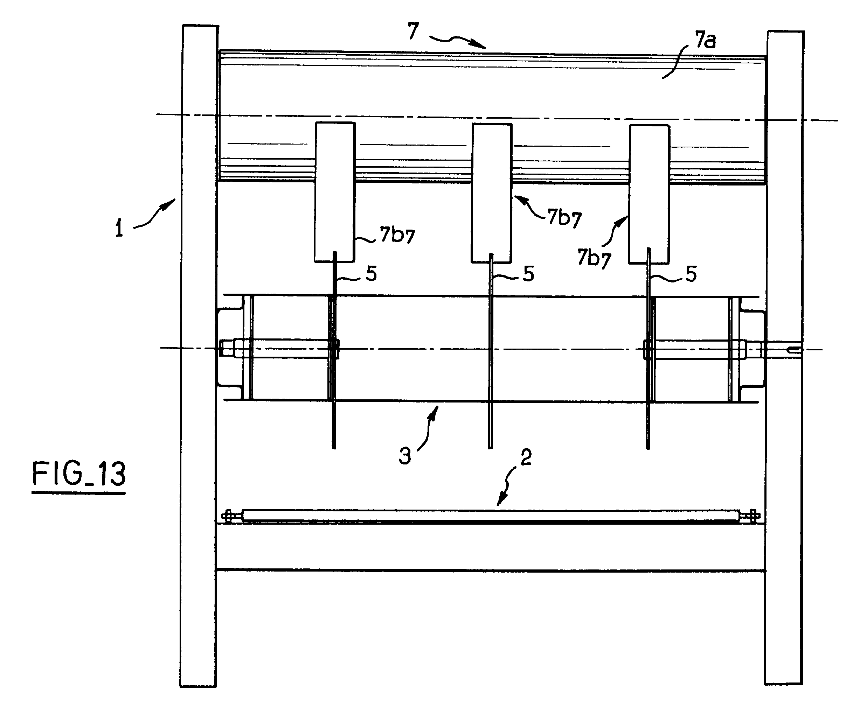

Les éléments de retenue de la herse 7 peuvent être des fers plats $7b_2$ (figure 6) ou tels que $7b_5$ (figure 9), ou de simples dents $7b_6$ (figure 11), ou encore des ensembles $7b_7$ (figure 12) comprenant une dent $7b_6$ soudée à un fer plat $7b_2$ correspondant à celui de la figure 6. La dent $7b_6$ des figures 11 et 12 est analogue à la dent $7b_1$ de la figure 5 excepté qu'elle présente une découpe circulaire 7h pour pouvoir être soudée contre le tube 7a constituant la traverse de la herse 7. L'élément de retenue $7b_7$ est, par ailleurs, identique à l'élément $7b_3$ de la figure 7.

Grâce à la solidarisation qui est réalisée entre la herse 7 et les bras 23, en cas de bourrage entre la herse 7 et le rotor 3, l'utilisateur dispose des puissants vérins 26 pour faire pivoter la herse 7 dans sa position relevée permettant de dégager les végétaux formant bourrage. Ainsi, en cas de bourrage, il suffit de manoeuvrer les vérins 26 pour amener les bras 23 dans la position haute représentée à la figure 10.

Lorsque les bras 23 sont en position basse permettant de placer le poussoir 21 en position de fermeture de l'arrière de la benne 1, la herse 7 est en position de service, c'est-à-dire que les éléments de retenue s'étendent vers le bas en direction du rotor 3.

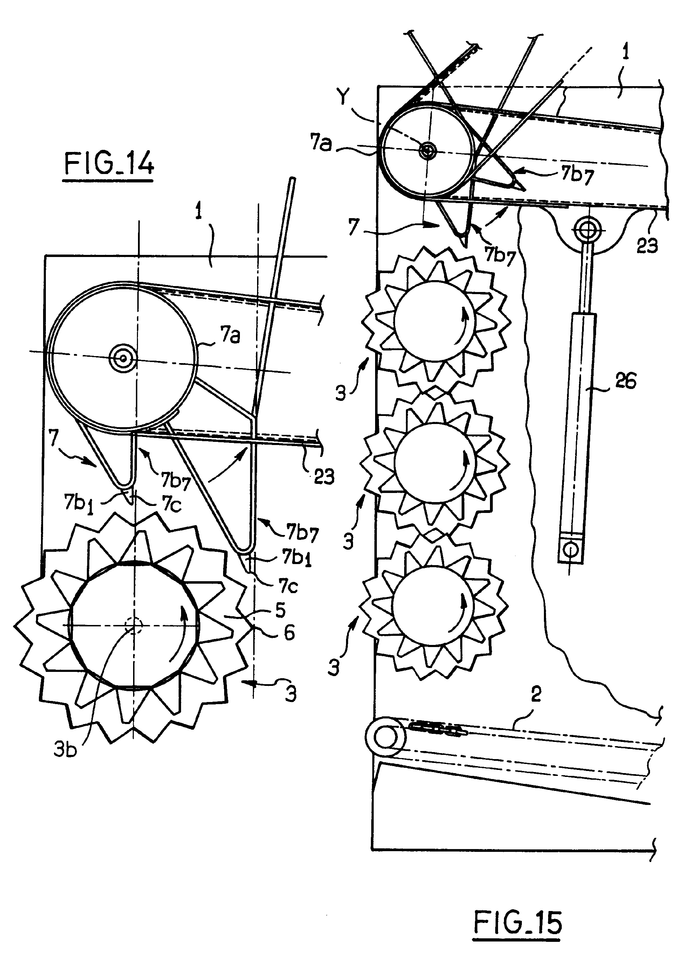

A la figure 14, on a représenté deux variantes de réalisation des éléments de retenue $7b_7$, variantes qui correspondent à deux extrêmes pour le positionnement de la pointe 7c de la dent $7b_1$.

Dans le cas de la variante de droite, la pointe 7c est sensiblement située dans le plan vertical tangent au cercle de révolution des pointes 6 des dents du disque tronçonneur 5, du côté amont du rotor 3.

Dans le cas de la variante de gauche, la pointe 7c est sensiblement située dans le plan vertical passant par l'axe 3b du rotor 3.

Il n'est pas souhaitable que la pointe 7c soit située en aval du plan vertical passant par l'axe 3b pour éviter que les éléments de retenue définissent avec le rotor 3 un profil en entonnoir favorisant les bourrages.

L'exemple représenté à la figure 15 est identique à celui de la figure 10 excepté que le dispositif démêleur comprend trois rotors 3 superposés au lieu d'un.

Bien entendu dans la domaine des revendications, l'invention n'est pas limitée aux exemples décrits et représentés.

Les rotors peuvent être prévus en nombre quelconque, et comporter des disques tronçonneurs et/ou des dents en nombre quelconque.


**Revendications**

1.  Benne destinée à la distribution de végétaux tels que le fourrage ou la paille destinés respectivement à l'alimentation du bétail ou à la constitution de leur litière et plus particulièrement lorsque lesdits végétaux se présentent sous la forme de bottes cylindriques, parallélépipédiques etc...., ladite benne comportant un fond mobile (2) acheminant les végétaux placés sur lui vers un dispositif démêleur (3) comprenant au moins un rotor denté (3) ayant un axe horizontal s'étendant dans un plan frontal par rapport au déplacement des végétaux (B, $B_1$, $B_2$), ce dispositif démêleur (3) étant disposé en amont d'un dispositif (11, 12) d'éjection des végétaux démêlés vers l'extérieur de la benne (1), ladite benne comprenant en outre une herse (7) qui comprend à son tour une traverse (7a) s'étendant le long du rotor denté (3) et au-dessus de celui-ci, et des éléments (7b, $7b_1$ à $7b_7$) de retenue des végétaux qui s'étendent depuis la traverse (7) (7a) vers le rotor (3), caractérisée en ce que la herse est une herse recycleuse qui renvoie dans la benne les paquets de végétaux approchant du sommet du dispositif démêleur (3) sans avoir été démêlés, et en ce qu'à ce titre des extrémités libres (7c) des éléments de retenue sont sensiblement situées radialement au-delà de la trajectoire circulaire d'un disque tronçonneur (5) porté par le rotor denté (3) et entre un plan vertical tangent à un cercle de révolution du dispositif démêleur côté amont et un plan vertical passant par l'axe (3b) du rotor (3) du dispositif démêleur.

2. Benne selon la revendication 1, caractérisée en ce que certains au moins des éléments ($7b_2$ à $7b_4$, $7b_7$) présentent une face (7d) de guidage des végétaux orientée vers l'intérieur de la benne (1) et s'étendant vers le haut à partir du rotor denté (3).

3. Benne selon la revendication 2, caractérisée en ce que l'extrémité inférieure de la face de guidage (7d) est raccordée à une face convexe (7e) de profil courbe.

4. Benne selon la revendication 1, caractérisée en ce que certains au moins des éléments de retenue ($7b_3$, $7b_4$, $7b_7$,) comportent une dent ($7b_1$) faisant saillie vers le rotor denté (3) par rapport à une face de garde (7e) située à distance de la traverse (7a).

5. Benne selon la revendication 4, caractérisée en ce que la face de garde (7e) se raccorde à une face de guidage (7d) orientée vers l'intérieur de la benne (1) et s'étendant vers le haut à partir du rotor denté (3).

6. Benne selon l'une des revendications 4 ou 5, caractérisée en ce que la pointe (7c) de la dent ($7b_1$) de certains au moins des éléments de retenue ($7b_1$, $7b_3$, $7b_4$, $7b_6$, $7b_7$) est sensiblement située dans le plan, transversal à l'axe de rotation (3b) du rotor denté (3), du disque tronçonneur (5) et à faible distance d'un cercle de révolution de ce disque, le rayon ($r_6$) de ce cercle de révolution étant supérieur au rayon ($r_4$) du cercle de révolution de dents (4) portées par le rotor denté (3).

7. Benne conforme à l'une des revendications 2 à 6, caractérisée en ce que lesdites faces (7d, 7c) des éléments de retenue sont écartées entre elles d'un élément de retenue à l'autre.

8. Benne selon l'une quelconque des revendications 1 à 7, caractérisée en ce que la herse (7) est montée de manière à pouvoir pivoter autour d'un axe (Y) sensiblement parallèle à l'axe de rotation (3b) du rotor denté (3).

9. Benne selon l'une quelconque des revendications 1 à 7, caractérisée en ce qu'elle comprend en outre, à une extrémité opposée au dispositif démêleur (3), un dispositif de préhension (21) porté à l'extrémité de bras (23) articulés à la benne (1) selon un axe (Y) voisin de la traverse (7a) et sensiblement parallèle à celle-ci, des moyens moteurs (26) pour soulever les bras (23) autour dudit axe (Y), et en ce que la herse (7) est solidaire des bras (23) de manière à permettre de débourrer la herse (7) par action des moyens moteurs (26) sur les bras (23).

10. Benne conforme à l'une des revendications 1 à 9, caractérisée en ce que lesdites extrémités libres (7a) sont voisines dudit plan vertical passant par l'axe (3b).

## Claims

1. An open semitrailer for distributing plants, e.g. fodder or straw for feeding cattle or forming their litter, more particularly when the plants are in the form of cylindrical or parallelepipedal or other-shaped bales, the semitrailer having a mobile base (2) on which the plants are placed and which conveys the plants towards a separating or bale-opening device (3) comprising at least one toothed rotor (3) having a horizontal shaft extending in a front plane with respect to the motion of the plants (B, $B_1$, $B_2$), the separating device (3) being disposed upstream of a device (11, 12) for ejecting separated plants from the semitrailer (1), the semitrailer also comprising a harrow (7) comprising a cross-member (7a) extending along and above the toothed rotor (3), and plant-retaining components (7b, $7b_1$ to $7b_7$) which extend from the cross-member (7) (7a) towards the rotor (3), characterised in that the harrow is a recycling harrow whereby bundles of plants approaching the top of the separating device (3) without having been separated are returned to the semitrailer, end to this end the free ends (7c) of the retaining components are substantially situated radially beyond the circular trajectory of a cutting disc (5) carried by the toothed rotor (3) and between a vertical plane at a tangent to a circle of revolution of the separating device at the upstream end and a vertical plane extending through the axis (3b) of the rotor (3) in the separating device.

2. A semitrailer according to claim 1, characterised in that at least some of the components ($7b_2$ to $7b_4$, $7b_7$) have a plant-guiding surface (7d) extending towards the interior of the semitrailer (1) and upwards from the toothed rotor (3).

3. A semitrailer according to claim 2, characterised in that the bottom end of the guide surface (7d) is connected to a convex surface (7e) having a curved cross-section.

4. A semitrailer according to claim 1, characterised in that at least some of the retaining components ($7b_3$, $7b_4$, $7b_7$) have a tooth ($7b_1$) which projects towards the toothed rotor (3) relative to a guard surface (7e) situated at a distance from the cross-member (7a).

5. A semitrailer according to claim 4, characterised in that the guard surface (7e) is connected to a guide surface (7d) extending towards the interior of the semitrailer (1) and upwards from the toothed rotor (3).

6. A semitrailer according to claim 4 or 5, characterised in that the tip (7c) of the tooth ($7b_1$) of at least some of the retaining components ($7b_1$, $7b_3$, $7b_4$, $7b_6$, $7b_7$) is situated substantially in the plane at right angles to the axis of rotation (3b) of the tooth rotor (3) of the cutting disc (5) and at a short distance from a circle of revolution of the last-mentioned disc, the radius ($r_6$) of this circle of revolution being greater then the radius ($r_4$) of the circle of revolution of the teeth (4) carried by the toothed rotor (3).

7. A semitrailer according to any of claims 2 to 6, characterised in that the surfaces (7d, 7c) of the retaining components are spaced apart between one retaining component and the next.

8. A semitrailer according to any of claims 1 to 7, characterised in that the harrow (7) is mounted so as to be pivotable around an axis (Y) substantially parallel to the axis of rotation (3b) of the toothed rotor (3).

9. A semitrailer according to any of claims 1 to 7, characterised in that it also, at an end remote from the separating device (3), comprises a gripping device (21) mounted at the end of an arm (23) pivoted to the semitrailer (1) along an axis (Y) near the cross-member (7a) and substantially parallel thereto, and also comprises drive means (26) for lifting the arms (23) around the axis (Y), and the harrow (7) is secured to the arms (23) so that the harrow (7) can be unblocked by action of the drive means (26) on the arms (23).

10. A semitrailer according to any of claims 1 to 9, characterised in that the free ends (7a) are near the vertical plane extending through the axis (3b).

**Patentansprüche**

1. Verteileinrichtung für pflanzliches Material wie Futtermittel oder Stroh als Viehfutter bzw. Einstreu, insbesondere wenn das pflanzliche Material als zylindrisch, parallelepipedisch usw. geformte Ballen vorliegt, wobei die Vorrichtung einen beweglichen Boden (2) hat, der das auf ihm abgelegte pflanzliche Material in Richtung eines Ballenschälers (3) fördert, der mindestens einen mit Zähnen ausgestatteten Rotor (3) umfaßt, der eine horizontale Achse hat, die sich in einer Frontalebene im Verhältnis zur Bewegung des pflanzlichen Materials (B, $B_1$, $B_2$) erstreckt, wobei dieser Ballenschäler (3) einer Vorrichtung (11, 12) zum Auswerfen des aus dem Ballen herausgelösten pflanzlichen Materials aus der Vorrichtung (1) vorgeordnet ist, wobei die Vorrichtung außerdem eine Egge (7) umfaßt, die ihrerseits einen Querträger (7a) umfaßt, der sich oberhalb und längs des mit Zähnen ausgestatten Rotors (3) erstreckt, sowie Rückhalteelemente (7b, $7b_1$ bis $7b_7$) für das pflanzliche Material, welche Elemente sich von dem Querträger (7, 7a) in Richtung des Rotors (3) erstrecken, dadurch gekennzeichnet, daß die Egge eine Rückführegge ist, die die sich dem höchsten Punkt des Ballenschälers (3) nähernden, zuvor nicht aufgelockerten Pakete pflanzlichen Materials zurück in den Ladewagen umlenkt, und daß hierzu freie Enden (7c) von Rückhalteelementen im wesentlichen radial außerhalb der kreisförmigen Bahn einer auf dem Rotor (3) sitzenden Trennscheibe (5) und zwischen einer Vertikalebene, die tangential zur aufsteigenden Seite eines Drehkreises des Ballenschälers ist, sowie einer durch die Achse (3b) des Rotors (3) des Ballenschälers verlaufenden Vertikalebene liegen.

2. Vorrichtung nach Anspruch 1, dadurch gekennzeichnet, daß zumindest einige der Rückhalteelemente ($7b_2$ bis $7b_4$, $7b_7$) eine Führungsfläche (7d) für das pflanzliche Material haben, welche Führungsfläche dem Inneren des Ladewagens (1) zugewandt ist und sich von dem mit Zähnen ausgestatten Rotor (3) aus nach oben erstreckt.

3. Vorrichtung nach Anspruch 2, dadurch gekennzeichnet, daß das untere Ende der Führungsfläche (7d) sich an eine konvexe Fläche (7e) gekrümmten Profils anschließt.

4. Vorrichtung nach Anspruch 1, dadurch gekennzeichnet, daß zumindest einige der Rückhaltelemente ($7b_3$, $7b_4$, $7b_7$ ) einen Zahn ($7b_1$ ) umfassen, der von einer von dem Querträger (7a) beabstandeten Schutzfläche (7e) aus in Richtung auf den mit Zähnen ausgestatteten Rotor (3) vorspringt.

5. Vorrichtung nach Anspruch 4, dadurch gekennzeichnet, daß die Schutzfläche (7e) sich an eine Führungsfläche (7d) anschließt, die dem Innenraum des Ladewagens (1) zugewandt ist und sich von dem Rotor (3) aus nach oben erstreckt.

6. Vorrichtung nach einem der Ansprüche 4 oder 5, dadurch gekennzeichnet, daß die Spitze (7c) des Zahns ($7b_1$) von zumindest einigen der Rückhalteelemente ($7b_1$, $7b_3$, $7b_4$, $7b_6$, $7b_7$) im wesentlichen in der Ebene der Trennscheibe (5), quer zu der Drehachse (3b) des Rotors (3) und in geringem Abstand von einem Drehkreis dieser Scheibe liegt, wobei der Radius ($r_6$) dieses Drehkreises größer als der Radius ($r_4$) des Drehkreises der von dem Rotor (3) getragenen Zähne (4) ist.

7. Vorrichtung nach einem der Ansprüche 2 bis 6, dadurch gekennzeichnet, daß die gennanten Flächen (7d, 7c) der Rückhalteelemente von einem Rückhalteelement zum nächsten voneinander beabstandet sind.

8. Vorrichtung nach einem der Ansprüche 1 bis 7, dadurch gekennzeichnet, daß die Egge (7) so montiert ist, daß sie um eine Achse (Y) schwenkbar ist, die im wesentlichen parallel zu der Drehachse (3b) des mit Zähnen ausgestatteten Rotors (3) ist.

9. Vorrichtung nach einem der Ansprüche 1 bis 7, dadurch gekennzeichnet, daß sie außerdem an einem dem Ballenschäler (3) entgegengesetzten Ende mit einer Greifvorrichtung ausgestattet ist, die am Ende von Armen (23) sitzt, die mit der Vorrichtung (1) über eine Achse (Y) gelenkig verbunden sind, die nahe dem Querträger (7a) und im wesentlichen parallel zu diesem verläuft, wobei die Vorrichtung motorische Mittel (26) zum Anheben der Arme (23) unter Drehung um die Achse (Y) umfaßt, und daß die Egge (7) mit den Armen (23) in der Weise fest verbunden ist, daß die Egge (7) durch Wirkung der motorischen Mittel (26) auf die Arme (23) gereinigt werden kann.

10. Vorrichtung nach einem der Ansprüche 1 bis 9, dadurch gekennzeichnet, daß die gennanten freien Enden (7a) sich nahe der gennanten, durch die Achse (3b) gehenden Vertikalebene befinden.

FIG_1

## FIG. 2

FIG_3

# FIG_4

EP 0 384 791 B1

FIG.5

FIG.8

FIG.7

FIG.6

FIG.12

FIG.11

$7b_1$

$7b_1$

$7b$

$7b_4$

$7b_3$

$7b_1$

$7b_2$

$7d$

$7e$

$7c$

$6$

$5$

$7g$

$7c$

$6$

$7e$

$6$

$5$

$7h$

$7b_6$

$7f$

$7e$

$7b_2$

$7d$

$7b_6$

$7h$

$7b_2$

$7b_7$

$7b_2$

EP 0 384 791 B1

# FIG_9

# FIG.10

FIG_13

EP 0 384 791 B1

FIG.14

FIG.15